# EUROPEAN PATENT APPLICATION

(11) **EP 3 090 861 A1**
(43) Date of publication of application: **09.11.2016**
(21) Application number: 15166311.9
(22) Date of filing: 05.05.2015
(51) Int. Cl.: B29C 65/36, B65B 51/22, B29C 65/50, B65H 19/00, B29L 9/00, B29K 705/00, B29K 705/02, B29K 711/12

(54) **INDUCTION HEATING SEALING DEVICE**

(71) Applicant: Tetra Laval Holdings & Finance S.A., 1009 Pully (CH)
(72) Inventor: Babini, Andrea, 41124 Modena (IT); Mancin, Sergio Thomas, 41121 Modena (IT); Luppi, Elisa, 41122 Modena (IT); Dalcero, Andrea, 41039 San Possidonio (IT)
(74) Representative: Tetra Pak - Patent Attorneys SE

(57) **Abstract**

An induction heating sealing device (30) for sealing a packaging material comprising an electrically conductive layer and advancing, in use, along a first direction (A), said induction heating sealing device (30) comprising an inductive element (100), said inductive element (100) comprising a first leg (31) extending along said first direction (A) and within which, in use, an alternate currents flows, said first leg (31) facing, in use, an area (44) of said packaging material to be sealed and being configured to induce, in use, an eddy current within said area (44), and a second leg (32) arranged on one side of said first leg (31) and facing a further area (45) of said packaging material, wherein said first leg (31) comprises at least one first portion (41) and at least one second portion (42) spaced apart from one another in a second direction (S) transversal to said first direction (A).

## Description

The present invention relates to an induction heating sealing device, in particular an induction heating sealing device for heat sealing packaging material for producing sealed packages of pourable food products.

As is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH) film, which is superimposed on a layer of heat-seal plastic material, and is in turn covered with another layer of heat-seal plastic material forming the inner face of the package eventually contacting the food product.

As is known, packages of this sort are produced on fully automatic packaging machines, on which the tube is formed continuously from the web-fed packaging material. More specifically, the web of packaging material is unwound off a reel and fed through a station for applying a sealing strip of heat-seal plastic material, and through an aseptic chamber of the packaging machine, where it is sterilized, e.g. by applying a sterilizing agent such as hydrogen peroxide, which is subsequently evaporated by heating, and/or by subjecting the packaging material to radiation of appropriate wavelength and intensity.

The web of packaging material is then fed through a number of forming assemblies which interact with the packaging material to fold it gradually from sheet form into tube shape.

More specifically, a first portion of the sealing strip is applied to a first longitudinal edge of the packaging material, on the face of the material eventually forming the inside of the packages; and a second portion of the sealing strip projects from the first longitudinal edge.

The forming assemblies are arranged in succession, and comprise respective roller-shaped folding members defining a number of compulsory passages for the packaging material, varying gradually in section from a C shape to a substantially circular shape.

On interacting with the folding members, a second longitudinal edge - opposite the first longitudinal edge - is laid on the outside of the first longitudinal edge with respect to the axis of the tube being formed. More specifically, the sealing strip is located entirely inside the tube, and the face of the second longitudinal edge facing the axis of the tube is superimposed partly on the second portion of the sealing strip, and partly on the face of the first longitudinal edge located on the opposite side to the first portion of the sealing strip.

Packaging machines of the above type are known in which the first longitudinal edge and second longitudinal edge are heat sealed to form a longitudinal seal along the tube, which is then filled with the sterilized or pasteurized food product, and is sealed and cut along equally spaced cross sections to form pillow packs, which are then folded mechanically to form respective parallelepiped-shaped packages.

More specifically, the heat-seal operation comprises a first heating step to heat the second longitudinal edge without the sealing strip; and a second pressure step to compress the sealing strip, the first longitudinal edge and the second longitudinal edge.

The first heating step melts the layer of heat-seal plastic material of the second longitudinal edge, which transmits heat by conduction to the first longitudinal edge and the sealing strip, so as to melt the layer of heat-seal plastic material of the first longitudinal edge and the heat-seal material of the sealing strip.

At the second pressure step, the tube is fed between a number of first rollers outside the tube, and at least one second roller inside the tube.

More specifically, the first rollers define a compulsory circular passage for the tube of packaging material, and have respective axes in a plane transversal to the path of the tube.

In the case of barrier material comprising a sheet of electrically conductive material, e.g. aluminum, the longitudinal seal may be formed by induction heat-sealing.

More specifically, the packaging machine comprises a sealing device which is arranged outside the tube.

The sealing device substantially comprises one or more inductive elements electrically fed by a high-frequency alternate current generator.

In use, the alternate current flowing inside the inductive elements generates an alternate magnetic field flux that generates eddy currents in the aluminium layer to melt the heat-seal plastic material locally.

As explained above, during operation of the packaging machine the packaging material is unwound off a reel to form the packages.

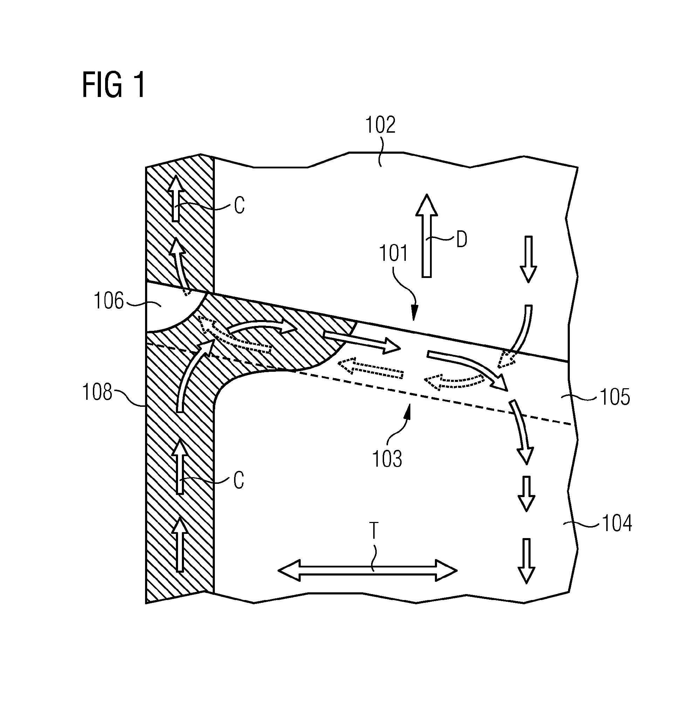

As shown in Figure 1, when a reel is exhausted, i.e. almost empty, a trailing edge 101 of the exhausted real 102 is sealed to a leading edge 103 of a new reel 104, whilst the packaging material is advanced along an advancing direction D. This operation can be carried out automatically, so that the packaging machine does not need to be stopped when the exhausted reel 102 is replaced with the new reel 104.

However, the region at which the trailing edge 101 of the exhausted reel 102 is sealed to the leading edge 103 of the new reel 104 defines a splice area 105 that creates a discontinuity for the eddy currents generated by the inductive element in the packaging material of the exhausted reel 102 and in the packaging material of the new reel 104 during the sealing phase, as described above.

The inductive element, when heating a continuous web of packaging material, generates eddy currents that are substantially parallel to the advancing direction D.

The inductive element, when heating a portion of packaging material comprising the splice area 105, generates in the trailing edge 101 and in the leading edge 103 eddy currents that do not cross the splice area 105, but define a sort of curved path C. In other words, the splice area 105 creates a border effect of the eddy currents on both the overlapped edges of the splice area 105.

In Figure 1, the hatching illustrates the heating pattern generated by the eddy currents. The heating pattern is not uniform along the splice area, i.e. in a transversal direction T, which is perpendicular to the advancing direction D. In particular, the heating pattern has a cold zone 106 close to a side edge 108 of the packaging material.

In particular, the temperature of the packaging material at the cold zone 106 can be not enough to provide a proper melting of the plastic layers and, therefore, a proper sealing.

An object of the invention is to improve the induction heating sealing devices for induction heating sealing a packaging material.

Another object of the invention is to provide an induction heating sealing device which generates a more uniform heating pattern - with respect to the know induction heating sealing devices - at a region of a sheet of packaging material at which a first portion of the packaging material has been spliced to another portion of the packaging material.

Another object of the invention is to provide an induction heating sealing device which generates a heating pattern having a significantly smaller cold zone - with respect to the know induction heating sealing devices - at a region of a sheet of packaging material at which a first portion of the packaging material has been spliced to another portion of the packaging material.

According to the present invention, there is provided an induction heating sealing device as claimed in claim 1.

A preferred, non-limiting embodiment of the invention will be described by way of example with reference to the accompanying drawings, in which:
Figure 1 schematically shows a heating pattern generated by eddy currents induced by a prior-art induction heating sealing device, in the region of a splice area of a packaging material, at which a trailing edge of an exhausted reel of packaging material is spliced to a leading edge of a new reel of packaging material;
Figure 2 shows a packaging machine comprising an induction heating sealing device according to the invention;
Figure 3 shows a heat-sealing station of the packaging machine of Figure 2;
Figure 4 is a plan view of the induction heating sealing device according to the invention.

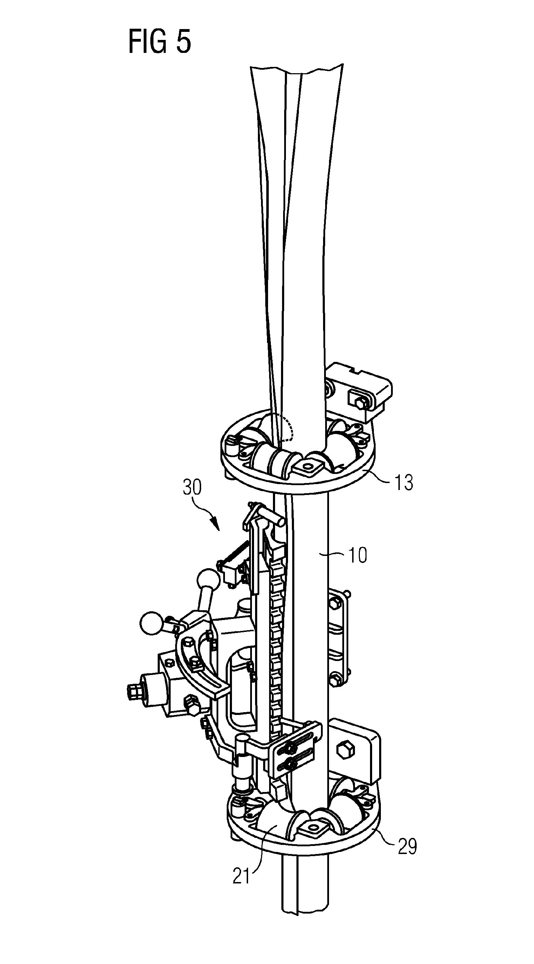

Figure 5 shows the induction heating sealing device according to the invention installed in the packaging machine of Figure 1;
Figure 6 schematically shows a heating pattern generated by eddy currents induced by the induction heating sealing device according to the invention, in the region of a splice area of a packaging material, at which a trailing edge of an exhausted reel of packaging material is spliced to a leading edge of a new reel of packaging material.

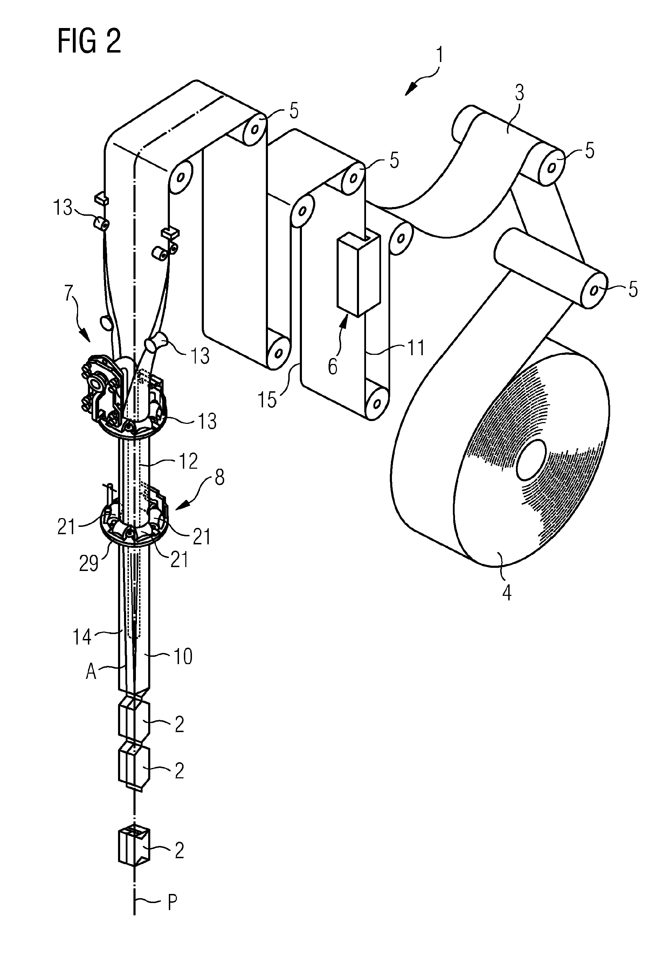

With reference to Figure 2, there is shown a packaging machine 1 for continuously producing sealed packages 2 of a food product from a web 3 of packaging material, which is unwound off a reel 4 and fed along a forming path P.

The packaging machine 1 preferably produces packages 2 of a pourable food product, such as pasteurized or UHT milk, fruit juice, wine, peas, beans, etc.

The packaging machine 1 may also produce packages 2 of a food product that is pourable when producing packages 2, and sets after packages 2 are sealed. One example of such a food product is a portion of cheese, which is melted when producing packages 2, and sets after packages 2 are sealed.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

The packaging material also comprises a layer of gas- and light-barrier material made of electrically conductive material, e.g. aluminium foil, which is superimposed on a layer of heat-seal plastic material, and is in turn covered with another layer of heat-seal plastic material forming the inner face of the package eventually contacting the food product.

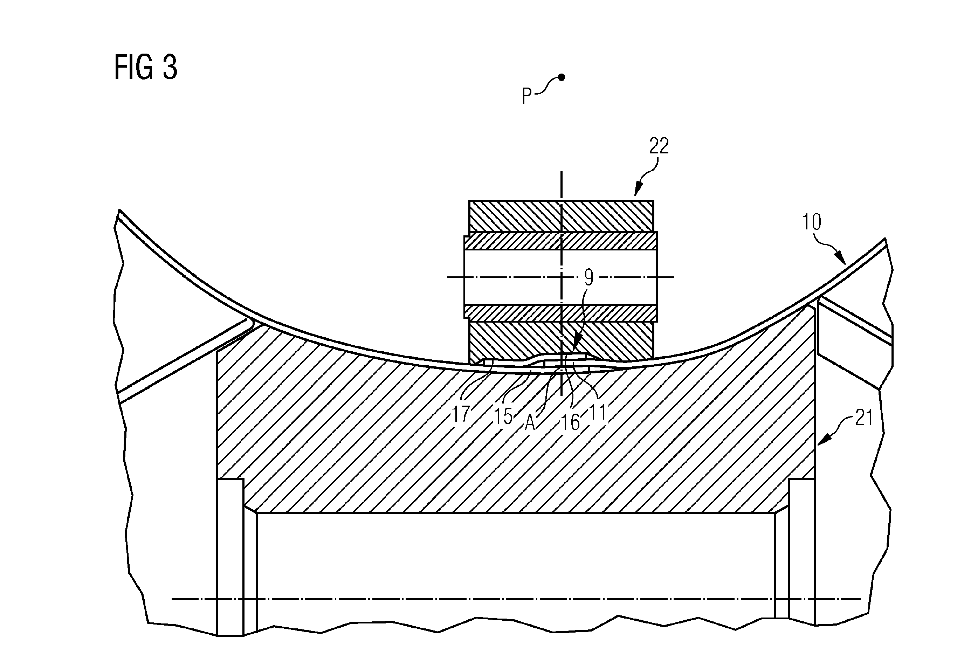

More specifically, the web 3 is fed along the forming path P by guide members 5, e.g. rollers or similar, and successively through a number of work stations, of which are shown schematically: a strip sealing station 6 for applying a sealing strip 9 (shown enlarged in thickness in Figure 3 for the sake of clarity) to the web 3, a forming station 7 for forming a tube 10 of packaging material, and a heat-sealing station 8 for forming a longitudinal seal 14 along the tube 10. The longitudinal seal 14 is continuous and extends along a first direction A parallel to the forming path P.

The packaging machine 1 also comprises a filling device 12 for pouring the sterilized or sterile-processed food product continuously into the tube 10 of packaging material; and a jaw-type forming assembly (not shown) for gripping, sealing, and cutting the tube 10 along equally spaced cross sections to form a succession of packages 2.

More specifically, at the strip sealing station 6, a longitudinal edge 11, parallel to the forming path P, of the web 3 is first heated, e.g. by heat induction, to melt the plastic layer. The web 3 has a further longitudinal edge 15 opposite the longitudinal edge 11 and also parallel to the forming path P.

Next, a portion 16 of the sealing strip 9 is first applied to the face of the longitudinal edge 11 eventually facing inwards of the packages 2, while a further portion 17 of the sealing strip 9 projects from the longitudinal edge 11.

Finally, the sealing strip 9 is pressed onto the longitudinal edge 11, e.g. by means of rollers not shown.

More specifically, the sealing strip 9 is made of heat-seal plastic material.

The sealing strip 9 prevents the longitudinal edge 11 from absorbing the food product once the tube 10 and the longitudinal seal 14 are formed, and also provides for improving the gas-barrier performance and physical strength of the longitudinal seal 14.

The forming station 7 comprises a number of forming assemblies 13 arranged successively along the forming path P, and which interact gradually with the web 3 to fold it into the form of the tube 10.

More specifically, the forming assemblies 13 comprise a plurality of rollers defining respective compulsory passages for the packaging material. The respective sections of the compulsory passages vary gradually from a C shape to a substantially circular shape.

More specifically, the axes of the rollers in each forming assembly 13 lie in a plane, which is arranged transversally - perpendicularly in the embodiment shown - to the forming path P.

The forming assemblies 13 gradually form the tube 10, so that the further longitudinal edge 15 is located outwards of the longitudinal edge 11 with respect to the axis of the tube 10. More specifically, when forming the tube 10, the sealing strip 9 is located inside the tube 10, and the inner face of the further longitudinal edge 15 is superimposed partly on the further portion 17 of the sealing strip 9, and partly on the outer face of the longitudinal edge 11 (Figure 3).

The heat-sealing station 8 comprises an induction heating sealing device 30 for heating the further longitudinal edge 15 and locally melting the heat-seal plastic material layer of the further longitudinal edge 15. Heat is transmitted by conduction from the further longitudinal edge 15 to the longitudinal edge 11 and the sealing strip 9, so as to locally melt the heat-seal plastic material layer of the longitudinal edge 11 and the heat-seal material of the sealing strip 9.

The heat-sealing station 8 also comprises a number of forming rollers 21 defining a compulsory circular passage for the tube 10; and one or more pressure rollers 22 for pressing the further portion 17 of the sealing strip 9, and the portion 16 of the sealing strip 9 and the longitudinal edge 11 onto the face of the further longitudinal edge 15 inside the tube 10, so that the heat-seal plastic material layers of the longitudinal edge 11 and the further longitudinal edge 15 and the heat-seal material of the sealing strip 9 blend completely to form the molecular bonds defining the longitudinal seal 14 of the tube 10.

More specifically, the rollers 21 are located outside the tube 10, and the pressure roller(s) 22 inside the tube 10.

The heat-sealing station 8 also comprises an annular support 29 which surrounds the tube 10 and supports the rollers 21.

The induction heating sealing device 30 comprises a an inductive element 100 having a first leg 31 extending along the first direction A (and along the forming path P) and a second leg 32 extending along the first direction A (and along the forming path P).

The first leg 31 comprises a first end 33 and a second end 34 opposite to the first end 33.

The second leg 32 comprises a further first end 35 and a further second end 36 opposite to the further first end 35.

The induction heating sealing device 30 further comprises a first connecting element 37 that connects the first end 33 and the further first end 35.

The induction heating sealing device 30 further comprises a second connecting element 38 that connects the second end 34 and the further second end 36.

The first connecting element 37 and the second connecting element 38 are arranged transversely with respect to the first leg 31 and the second leg 32.

The first leg 31, the second leg 32, the first connecting element 37 and the second connecting element 38 are made of electrically conductive material and define an electric circuit within which an alternate current - generated by a high-frequency alternate current generator (not shown) - flows, in use.

In particular, the second leg 32 is interrupted so as to define a first free end 46 and a second free end intended to be connected to the high-frequency alternate current generator.

The first leg 31, the second leg 32, the first connecting element 37 and the second connecting element 38 define a gap 39, or an aperture, in the induction heating sealing device 30.

The first leg 31 comprises at least one first portion 41 extending along the first direction A (and along the forming path P) and at least one second portion 42 extending along the first direction A (and along the forming path P).

The at least one first portion 41 and the at least one second portion 42 are spaced apart from each other in a second direction S transversal to the first direction A. In other words, the at least one first portion 41 and the at least one second portion 42 are arranged at a distance d along the second direction S.

In the example shown, the second direction S is perpendicular to the first direction A.

The at least one first portion 41 and the at least one second portion 42 are connected by a third portion 43 of the first leg 31 extending along the second direction S.

The first portion 41 has a first width W1 measured along the second direction S.

The second portion 42 has a second width W2 measured along the second direction S.

The third portion 43 has a third width W3 measured along the first direction A.

The second leg 32 has a width W measured along the second direction S.

The width W is greater than the first width W1, the second width W2 and the third width W3.

In the embodiment shown, the first width W1, the second width W2 and the third width W3 are equal to each other.

The induction heating sealing device 30 comprises a plurality of first portions 41, a plurality of second portions 42 and a plurality of third portions 43 arranged so that the first leg 31 has a polygonal shape.

In the embodiment shown, the polygonal shape is defined by a plurality of straight segments defined by the first portions 41, the second portions 42 and the third portions 43.

In particular, the polygonal shape is formed by a succession of basic units 40, each of which is formed by a first portion 41 and a second portion 42, parallel to each other, and a third portion 43 extending between the first portion 41 and the second portion 42 and perpendicular to the first portion 41 and the second portion 42.

The first leg 31, therefore, has the general shape of a battlement having a plurality of merlons defined by the first portions 41, the second portions 42 and the third portions 43.

The first leg 31 faces, in use, a first area 44 of the packaging material that comprises the further longitudinal edge 15.

In use, the first portions 41 are superimposed to, and substantially aligned with, the further longitudinal edge 15.

The second leg 32 faces, in use, a second area 45 of the packaging material that is spaced apart from the further longitudinal edge 15 (i.e. from the first area 44) along the second direction S.

The first leg 31 and the second leg 32 are arranged on the same side of the packaging material.

The alternate current that flows inside the first leg 31 generates an eddy current in the aluminium layer that - when the packaging material is advanced along the first direction A - is strong enough to melt the heat-seal plastic material layer at the first area 44.

The alternate current that flows inside the second leg 32 generates an eddy current in the aluminium layer that - when the packaging material is advanced along the first direction A - is not strong enough to melt the heat-seal plastic material layer at the second area 43.

In other words, the first leg 31 acts as an active branch (i.e. capable of melting the heat-seal plastic material layer) of the electric circuit of the induction heating device 30, whilst the second leg 32, together with the first connecting element 37 and the second connection element 38, simply acts as a return branch (i.e. not capable of melting the heat-seal plastic material layer) of the electric circuit of the induction heating device 30.

This is basically due to the fact that the first width W1 of the first portion 41, the second width W2 of the second portion 42 and the third width W3 of the third portion 43 are smaller than the width W of the second leg 32.

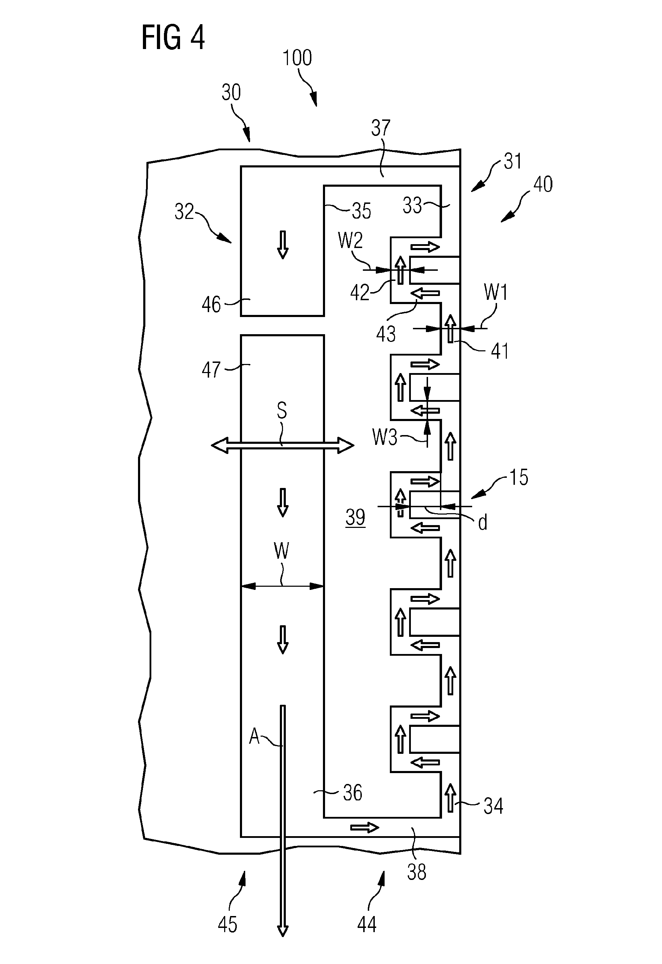

From the above, it clearly appears that - in use - the electrical current flows in the first portions 41 and in the second portions 42 in the same direction (as schematically shown by the arrows in Figure 4).

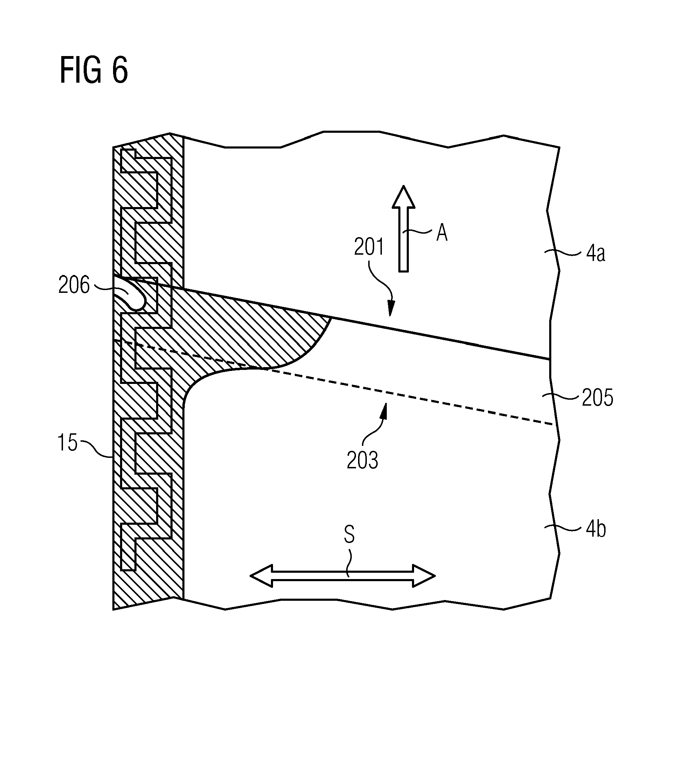

Figure 6 shows the heating pattern generated by the induction heating sealing device 30 at a splice area 205, i.e. a region at which a trailing edge 201 of an exhausted reel 4a of packaging material is sealed to a leading edge 203 of a new reel 4b of packaging material.

The splice area 205 creates a discontinuity for the eddy currents generated by the induction heating sealing device 30 in the packaging material of the exhausted reel 4a and in the packaging material of the new reel 4b.

Due to the fact that the first portion 41 and the second portion 42 are spaced apart from each other in the second direction S, the eddy current generated by the first leg 31 flows close to the splice area 205 at the further longitudinal edge 15, in particular much closer than in the case of the known induction heating sealing devices.

In this way the heating pattern generated by the induction heating sealing device 30 comprises a cold zone 206 that is significantly smaller than the cold zone of the known induction heating sealing devices, in which the first leg is formed by a straight bar.

During operation of the packaging machine 1 the web 3 is unwound off the reel 4 and fed along the forming path P.

More specifically, the web 3 is fed by the guide members 5 along the forming path P and, in succession, through the strip sealing station 6, the forming station 7 and the heat-sealing station 8.

At the strip sealing station 6, the longitudinal edge 11 is heated, and the portion 16 of the sealing strip 9 is applied to the face of the longitudinal edge 11 eventually facing inwards of the packages 2. Once the portion 16 is applied to the longitudinal edge 11 the further portion 17 projects from the longitudinal edge 11.

Next, the web 3 interacts gradually with the forming assemblies 13, and is folded to superimpose the longitudinal edge 11 and the further longitudinal edge 15 and form the tube 10 not yet sealed longitudinally.

More specifically, the forming assemblies 13 fold the web 3 so that the sealing strip 9 is located inside the as yet unsealed tube 10, the further longitudinal edge 15 is located radially outwards of the longitudinal edge 11 and the further portion 17 with respect to the axis of the tube 10 still to be sealed longitudinally, and the longitudinal edge 11 is located radially outwards of the portion 16.

The seal 14 is formed, in the heat-sealing station 8, by sealing to the inner face of the further longitudinal edge 15 the further portion 17 and the face of the longitudinal edge 11 on the opposite side to the portion 16.

More precisely, the induction heating sealing device 30 heats the further longitudinal edge 15 to melt the heat-seal plastic material layer; heat is transmitted by conduction from the further longitudinal edge 15 to the longitudinal edge 11 and the sealing strip 9 to melt the heat-seal plastic material layer of the longitudinal edge 11 and the heat-seal material of the sealing strip 9.

In detail, the further longitudinal edge 15 is detached from the longitudinal edge 11 as it travels in front of the first leg 31 of the induction heating sealing device 30.

The alternate current flowing in the first leg 31 generates an eddy current in the packaging material forming the further longitudinal edge 15. This eddy current results, in turn, in the heating of the further longitudinal edge 15.

Next, the tube 10 is fed through the circular passage defined by the forming rollers 21 and the pressure roller(s) 22. The longitudinal edge 11, the further longitudinal edge 15 and the sealing strip 9 are compressed between the forming rollers 21 and the pressure roller(s) 22 to blend the heat-seal plastic material layer of the longitudinal edge 11 and the further longitudinal edge 15, and the heat-seal material of sealing strip 9, and so form the molecular bonds defining the seal 14 of the finished tube 10.

The longitudinally sealed tube 10 is filled continuously with the pourable food product by the filling device 12, and is then fed through a jaw-type forming assembly (not shown) where it is gripped, sealed, and cut along equally spaced cross sections to form a succession of packages 2.

The advantages of the induction heating sealing device 30 according to the invention will be clear from the foregoing description.

In particular, the first portions 41 and the second portions 42 of the first leg 31 - being spaced apart from each other along the second direction S - induce in the packaging material eddy currents that flow close to the further longitudinal edge 15 at the spice area 205. In view of this, the heating pattern comprises a very small cold zone 106.

In this way, the risk that the heat-seal plastic material layer is not properly melt by the eddy currents - and therefore the tube 10 is not properly sealed - is highly reduced with respect to the known induction heating sealing devices.

Clearly, changes may be made to the induction heating sealing device as described and illustrated herein without, however, departing from the scope of the present invention as defined in the accompanying claims.

In particular, the induction heating sealing device according to the invention could be used not only in the heat-sealing station 8 to form the closed tube 10, but also in the strip sealing station 6 to seal the sealing strip 6 to the longitudinal edge 11.

## Claims

1. An induction heating sealing device (30) for sealing a packaging material comprising an electrically conductive layer and advancing, in use, along a first direction (A), said induction heating sealing device (30) comprising an inductive element (100), said inductive element (100) comprising a first leg (31) extending along said first direction (A) and within which, in use, an alternate currents flows, said first leg (31) facing, in use, an area (44) of said packaging material to be sealed and being configured to induce, in use, an eddy current within said area (44), and a second leg (32) arranged on one side of said first leg (31) and facing a further area (45) of said packaging material, wherein said first leg (31) comprises at least one first portion (41) and at least one second portion (42) spaced apart from one another in a second direction (S) transversal to said first direction (A).

2. An induction heating sealing device according to claim 1, wherein said first leg (31) further comprises a third portion (43) arranged along said second direction (S) connecting said first portion (41) and said second portion (42).

3. An induction heating sealing device according to claim 2, wherein said first portion (41) has a first width (W1) measured along said second direction (S), said second portion (42) has a second width (W2) measured along said second direction (S), said third portion (43) has a third width (W3) measured along said first direction (A) and said second leg (32) has a width (W) measured along said second direction (S), said width (W) being greater than said first width (W1), said second width (W2) and said third width (W3).

4. An induction heating sealing device according to claim 2, or 3, wherein said second direction (S) is perpendicular to said first direction (A).

5. An induction heating sealing device according to any one of claims 2 to 4, wherein said first leg (31) comprises a plurality of first portions (41) and plurality of second portions (42) connected by plurality of third portions (43), so that said first leg (31) has a polygonal shape.

6. An induction heating sealing device according to claim 5, wherein said polygonal shape is defined by a plurality of basic units (40) extending one after the other along said first direction (A), each basic unit being formed by one of said first portions (41) and by one of said second portions (42), parallel to each other, and by one of said third portions (43) extending between said one of said first portions (41) and said one of said second portions (42) and perpendicular to said one of said first portions (41) and said one of said second portions (42).

7. An induction heating sealing device according to any one of the preceding claims, wherein said zone (44) comprises a longitudinal edge (15) of said packaging material extending along said first direction (A), said first portions (41) being superimposed to, and substantially aligned with, said longitudinal edge (15).

8. An induction heating sealing device according to claim 7, wherein said second leg (32) faces, in use, a second zone (45) of said packaging material that is spaced apart from said longitudinal edge (15) along said second direction (S).

9. An induction heating sealing device according to any one of the preceding claims, wherein said first leg (31) and said second leg (32) are arranged on the same side of said packaging material.

10. An induction heating sealing device according to any one of the preceding claims, wherein said first leg (31) comprises a first end (33) and a second end (34) opposite to said first end (33), said second leg (32) comprises a further first end (35) and a further second end (36) opposite to said further first end (35), said induction heating sealing device (30) further comprising a first connecting element (37) that connects said first end (33) and said further first end (35) and a second connecting element (38) that connects said second end (34) and said further second end (36).

11. An induction heating sealing device according to claim 10, wherein said first connecting element (37) and said second connecting element (38) are arranged transversely with respect to said first leg (31) and said second leg (32).

12. An induction heating sealing device according to claim 10, or 11, wherein said first leg (31), said second leg (32), said first connecting element (37) and said second connecting element (38) define a gap (39) in said induction heating sealing device (30).

13. An induction heating sealing device according to any one of claims 10 to 12, wherein said first leg (31), said second leg (32), said first connecting element (37) and said second connecting element (38) are made of electrically conductive material and define an electric circuit.

14. An induction heating sealing device according to claim 13, wherein said first leg (31) acts as an active branch of said electric circuit, whilst said second leg (32), together with said first connecting element (37) and said connection element (38), acts as a return branch of said electric circuit.

15. An induction heating sealing device according to claim 13, or 14, wherein, in use, the electrical current flows in said first portion (41) and in said second portion (42) in the same direction.
